# EUROPEAN PATENT APPLICATION

(11) **EP 4 391 263 A1**
(43) Date of publication of application: **26.06.2024**
(21) Application number: 22307035.0
(22) Date of filing: 23.12.2022
(51) Int. Cl.: H02G 15/103, H02G 15/184, H02G 15/04, H02B 13/035

(54) **NOVEL T-CONNECTOR DESIGN FOR ROBUST AND VERSATILE HIGH VOLTAGE CONNECTIONS**

(71) Applicant: Nexans, 92400 Courbevoie (FR)
(72) Inventor: DOEDENS, Espen, 1788 HALDEN (NO); FRISK, Nils-Bertil, 45297 STRÖMSTAD (SE); EYSSAUTIER, Quentin, 1734 HAFSLUNDSOY (NO)
(74) Representative: Ipsilon

(57) **Abstract**

The present invention relates to a connector (1) for high voltage cables comprising a metal conductor (11) comprising a first elongated conductor element having a first end (12a), a second end (12b) and an intermediate section (12c) between the first end (12a) and the second end (12b); an insulating layer (21); a semiconductive layer (31). Wherein the insulating layer is moulded onto the second end (12b) and the intermediate section (12c) of the first elongated conductor element (12) and the insulating layer (21) is provided at a first insulator distance (DI1) from the first end (12a) of the first elongated conductor element (12). The semiconductive layer (31) is provided outside of the insulating layer (21) and the semiconductive layer (31) is provided at a first semiconductor distance (DS1) from the first end (12a) of the first elongated conductor element (12). The first insulator distance (DI1) is shorter than the first semiconductor distance (DS1). The insulating layer (21) is moulded as one single insulating body.

## Description

### FIELD OF THE INVENTION

The present invention relates to a connector for a high voltage cable.

### BACKGROUND OF THE INVENTION

There are several low-maintenance alternatives for connecting low voltage cables (up to 42 kV) and branching off from a single cable core into multiple cores with minimal space requirement. Such connections have also been realized by means of a factory joint approach with vulcanized insulation layers. These approaches can be very challenging to scale to higher voltage levels.

US6227908 B1 discloses electrical interconnection arrangements provided for connecting together two pieces of electrical equipment. A first connection component includes a first elongate conductive member, which in use is at a relatively high voltage, enclosed within insulating material. A portion of the first conductive member protrudes at one end beyond an end surface of the insulating material. The other end of the first member is arranged for electrical connection with one of the pieces of electrical equipment. One end of the first conductive member has an enlarged radiused region within the insulating material adjacent the protruding portion to provide electrical stress relief at the exposed surface of the insulating material. A second connection component includes a second elongate conductive member enclosed within insulating material which has a socket exposed at an end surface thereof for receiving the protruding end of the first conductive member. The other end of the second member is arranged for electrical connection with the other of the pieces of electrical equipment. A respective conductive layer extends over the surface of the insulating material of each connection component at one end and extends there along towards another end to provide electrical screening, each conductive layer terminating in respective first and second connection portions.

For higher voltage levels, today' s solutions require the use of a full gas insulated switchgear (GIS) system to branch cable cores, which is a large assembly and typically not maintenance free.

One objective of the invention is to increase the efficiency of making connections for high voltage cables.

One objective of the invention is to increase the reliability of the joint between the connection and the cable.

### SUMMARY OF THE INVENTION

The present invention relates to a connector for a high voltage cable, comprising: a metal conductor comprising a first elongated conductor element having a first end, a second end and an intermediate section between the first end and the second end;
an insulating layer;
a semiconductive layer;
characterized in that
the insulating layer is moulded onto the second end and the intermediate section of the first elongated conductor element;
the insulating layer is provided at a first insulator distance from the first end of the first elongated conductor element;
the semiconductive layer is provided outside of the insulating layer;
wherein the semiconductive layer is provided at a first semiconductor distance from the first end of the first elongated conductor element;
wherein the first insulator distance is shorter than the first semiconductor distance; wherein the insulating layer is moulded as one single insulating body.

As used herein, the term "high voltage cable" is referring to a cable with a nominal voltage rating of 52 kV or more. Typically, voltages in the interval between 52 kV to 245 kV are referred to as high voltage within this area of technology, while the interval between 245 kV to 800 kV is referred to as extra high voltage.

In one aspect, the insulating plastic materials comprise thermoplastics or thermosetting polymers.

In one aspect, the insulation plastic material comprises epoxy, or polyethylene, cross-linked polyethylene, or a thermoplastic polymer.

In one aspect, the connector is placed in a watertight housing.

In one aspect, the connector is a termination connector for a single cable section.

In one aspect, the metal conductor comprises:
a spheroid-shaped conductor element connected to the second end of the first elongated conductor element;
wherein the insulating layer is moulded onto the spheroid-shaped conductor element.

In one aspect, the sphere of the spheroid-shaped conductor element is connected to the metal conductor by welding or bolting.

In one aspect, the metal conductor comprises a second elongated conductor element having a first end, a second end and an intermediate section between the first end and the second end;
wherein the second end of the first elongated conductor element is connected to the second end of the second elongated conductor element;
wherein the insulating layer is moulded onto the second end and the intermediate section of the second elongated conductor element;
wherein the insulating layer is provided a second insulator distance from the first end of the second elongated conductor element;
wherein the semiconductive layer is provided at a second semiconductor distance from the first end of the second elongated conductor element.

In one aspect, the two elongated conductor elements are separate elements connected to each other by welding or bolting.

In one aspect, the spheroid-shaped conductor element is connected between the second end of the first elongated conductor element and the second end of the second elongated conductor element.

In one aspect, the metal conductor comprises a third elongated conductor element having a first end, a second end and an intermediate section between the first end and the second end;
wherein the second end of the third elongated conductor element is connected to the second ends of the first and second elongated conductor elements;
wherein the insulating layer is moulded onto the second end and the intermediate section of the third elongated conductor element;
wherein the insulating layer is provided at a third insulator distance from the first end of the third elongated conductor element;
wherein the semiconductive layer is provided at a third semiconductor distance from the first end of the third elongated conductor element.

In one aspect, the three elongated conductor elements are separate elements connected to each other by welding or bolting.

In one aspect, the second end of the third elongated conductor element is connected to the spheroid-shaped conductor element.

In one aspect, the first, second and third elongated conductor elements are forming a T-shaped structure or a Y-shaped structure.

In one aspect, the first, second and third elongated conductor elements are located in one common plane.

In one aspect, the intermediate sections of the first and second elongated conductor elements are located in a first plane, wherein the first end of the third elongated conductor element is located in a plane different from the first plane.

In one aspect, the metal conductor comprises:
a first elongated joining element;
wherein the second end of the first elongated conductor element is connected to the second end of the second elongated conductor element via the first elongated joining element;
wherein the insulating layer is moulded onto the first elongated joining element.

In one aspect, the first and second elongated conductor elements together with the first joining element are forming a U-shaped structure.

In one aspect, the metal conductor comprises a second elongated joining element; wherein the second end of the third elongated conductor element is connected to the second end of the second elongated conductor element via the second elongated joining element;
wherein the insulating layer is moulded onto the second elongated joining element.

In one aspect, the first, second and third elongated conductor elements together with the first and second elongated joining elements are forming an E-shaped structure.

In one aspect, the metal conductor is made as one single metal body.

In one aspect, the one single metal body may be machined from one metal piece, it may be made by an additive manufacturing process, etc.

In one aspect, the metal conductor is made from non-ferrous metals such as aluminium or copper.

In one aspect, a transition area between the second ends of the first and second elongated conductor elements is rounded.

In one aspect, the transition area is rounded with a radius Rcp. The radius Rcp will depend on the voltage level of the electrical system in which the connector is used.

According to the above, the electric field in the connector is distributed uniformly.

In one aspect, the connector is a joining element for joining at least two cable sections.

### LIST OF FIGURES

- Fig. 1 -: Cross sectional view of T-connector;
- Fig. 2 -: Cross sectional view of T-connector with two pre-manufactured slip-on joints and high voltage cables;
- Fig. 3a -: Cross sectional view of I - connector for stop joint;
- Fig. 3b -: Cross sectional view of I - connector for stop joint with spheroid-shaped conductor element;
- Fig. 4a -: Cross sectional view of I - connector;
- Fig. 4b -: Cross sectional view of I - connector with spheroid-shaped conductor element;
- Fig. 5 -: Cross sectional view of U - connector;
- Fig. 6a -: Cross sectional view of Y - connector;
- Fig. 6b -: Cross sectional view of Y - connector with spheroid-shaped conductor element;
- Fig. 7 -: Cross sectional view of E-connector;
- Fig. 8 -: Cross sectional view of X - connector - 2D planar variant with larger angles between the arms;
- Fig. 9 -: three-dimensional view of Y - connector - with conductor elements defining two different planes;
- Fig. 10 -: Cross sectional view of the connection between two metal conductors;
- Fig. 11 -: Cross sectional view of I - connector as stop joint and a high voltage cable with slip-on joint.

### DETAILED DESCRIPTION

### First embodiment: I-connector for a stop joint

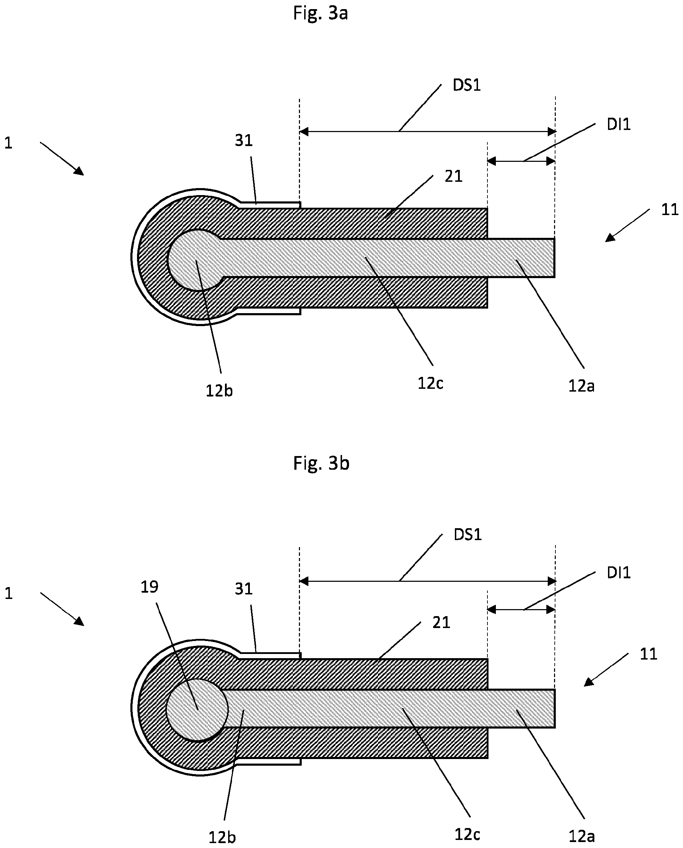

Initially, it is referred to fig. 3a. Here it is shown a connector 1 which is used as an I-stop joint for a high voltage cable. The connector 1 comprises a metal conductor 11 comprising an elongated conductor element 12 having a first end 12a, a second end 12b and an intermediate section 12c between the first end 12a and the second end 12b.

The connector 1 further comprises an insulating layer 21 moulded as one single body onto the second end 12b and the intermediate section 12c of the first elongated conductor element 12. In this way, the first end 12a is protruding from the insulating layer 21 with a distance referred to as a first insulator distance DI1.

The connector 1 further comprises a semiconductive layer 31 provided outside of the insulating layer 21. The semiconductive layer 31 is provided at a distance referred to as a first semiconductor distance DS1 from the first end 12a of the first elongated conductor element 12.

As shown in fig. 3a, the first insulator distance DI1 is shorter than the first semiconductor distance DS1.

In fig. 3a, the second end 12b is rounded to achieve a better distribution of the electric field strength within the connector 1.

Due to the distances DI1, DS1, it is easy to connect the connector 1 to an end of a high voltage cable, either by a joining process or by using a slip-on joint.

It is now referred to fig. 3b. Here, an alternative embodiment of fig. 3a is shown. It should be noted that only differences between fig. 3b and fig. 3a will be described in detail herein.

In fig. 3b, the metal conductor 11 comprises a spheroid-shaped conductor element 19 connected to the second end 12b of the elongated conductor element 12. Here, the metal conductor 11 is made of two bodies connected to each other.

It should be noted that the insulating layer 21 is moulded as one single body onto the spheroid-shaped conductor element 19, the second end 12b and the intermediate section 12c of the elongated conductor element 12 in similar way as for the embodiment of fig. 3a. Hence, the connector 1 of fig. 3b will in use be similar to, or identical to, the connector of fig. 3a.

The first end 12a and the intermediate section 12c have a circular cross section with a diameter adapted to the diameter of the cable the connector 1 is being connected to. The thickness of the insulating layer 21 is adapted to the thickness of the insulating layer of the cable the connector 1 is being connected to. The thickness of the semiconductive layer 31 is also adapted to the thickness of the semiconductive layer of the cable the connector 1 is being connected to.

### Second embodiment: I-connector

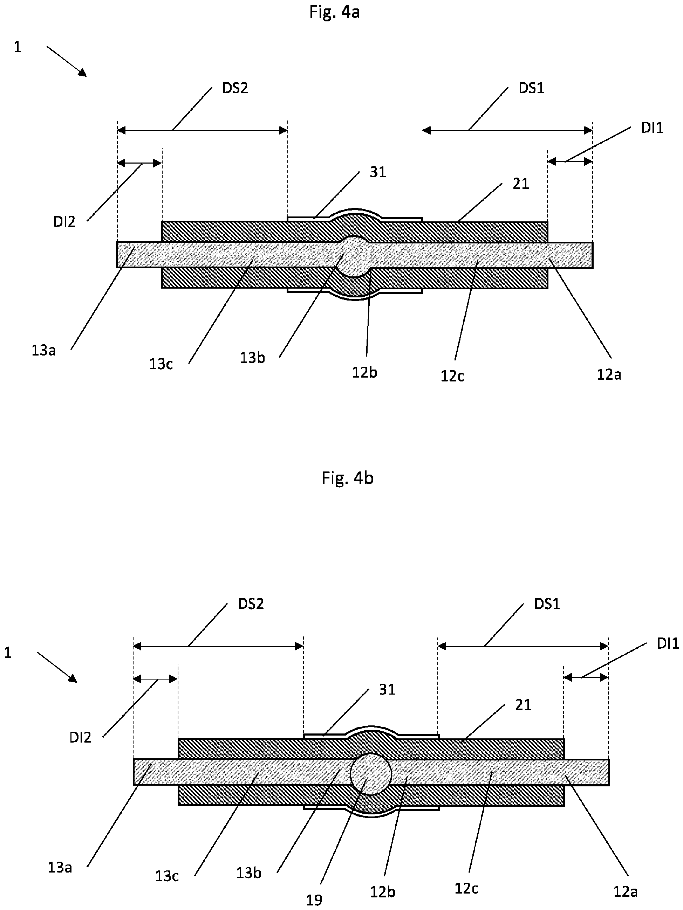

It is now referred to fig. 4a. The connector 1 also here comprises a metal conductor 11 comprising an elongated connector element 12 as described in the first embodiment above.

In addition, the metal conductor 11 here comprises a second elongated conductor element 13 having a first end 13a, a second end 13b and an intermediate section 13c between the first end 13a and the second end 13b.

The metal conductor 11 shown in fig. 4a is obtained by connecting the second end 12b of the first elongated conductor element 12 with the second end 13b of the second elongated conductor element 13.

The connector 1 comprises an insulating layer 21 moulded as one single body onto the second end 12b and the intermediate section 12c of the first elongated conductor element 12 as described for the first embodiment. In addition, the insulating layer 21 is moulded onto the second end 13b and the intermediate section 13c of the second elongated conductor element 13. In this way, the first end 13a is protruding from the insulating layer 21 with a distance referred to as a second insulator distance DI2.

Connector 1 also comprises a semiconductive layer 31 provided outside of the insulating layer 21 at a first semiconductor distance DS1 from the first end 12a of the first elongated conductor element 12 as described for the first embodiment. In addition, it is also provided at a distance referred to as a second semiconductor distance DS2 from the first end 13a of the second elongated conductor element 13.

Fig. 4b shows an I-connector where the metal conductor 11 is formed by connecting a spheroid-shaped conductor element 19 to the second end 12b of the first elongated conductor element 12 and to the second end 13b of the second elongated conductor element 13.

The insulating layer 21 is moulded as one single body onto the spheroid-shaped conductor element 19, the second end 12b and the intermediate section 12c of the first elongated conductor element 12 and the second end 13b and the intermediate section 13c of the second elongated conductor element 13 in a similar way as the embodiment shown in fig. 4a. Also, the semiconductive layer 31 is provided in a similar way as in fig 4a extending a first semiconductor distance DS1 from the first end 12a of the first elongated conductor element 12 and a second semiconductor distance DS2 from the first end 13a of the second elongated conductor element 13.

### Third embodiment: T and Y-connectors

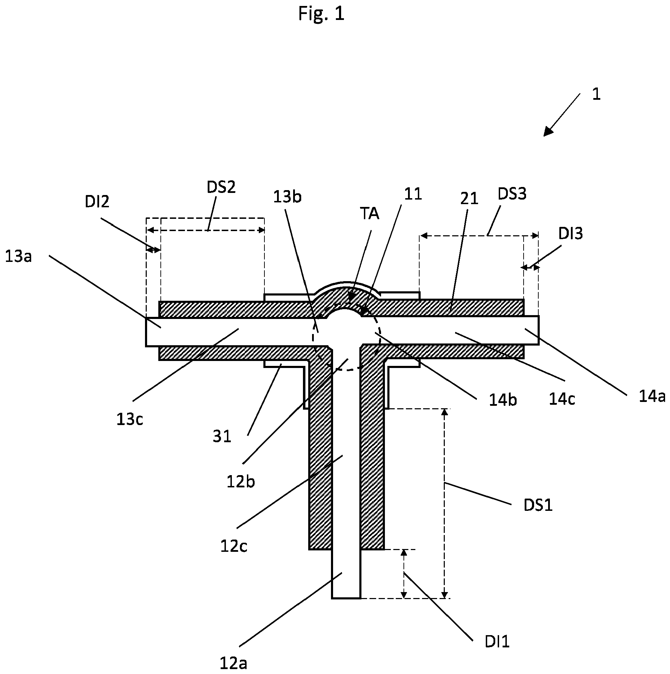

Figures 1, 2 and 6a show a connector 1 with a metal conductor 11 with a first elongated conductor element 12 and a second elongated conductor element 13 as described in the second embodiment above. In addition, the metal conductor 11 comprises a third elongated conductor element 14 having a having a first end 14a, a second end 14b and an intermediate section 14c between the first end 14a and the second end 14b.

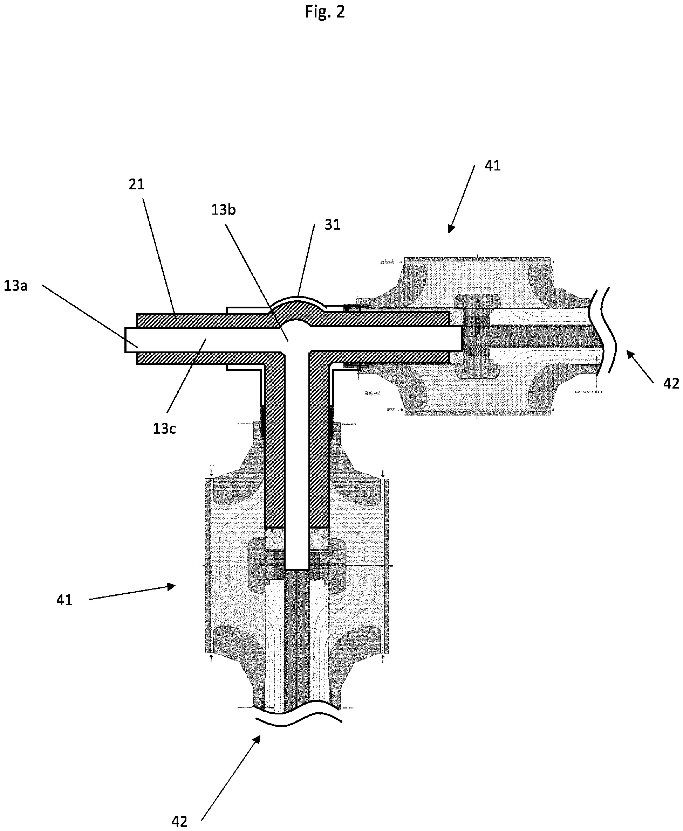

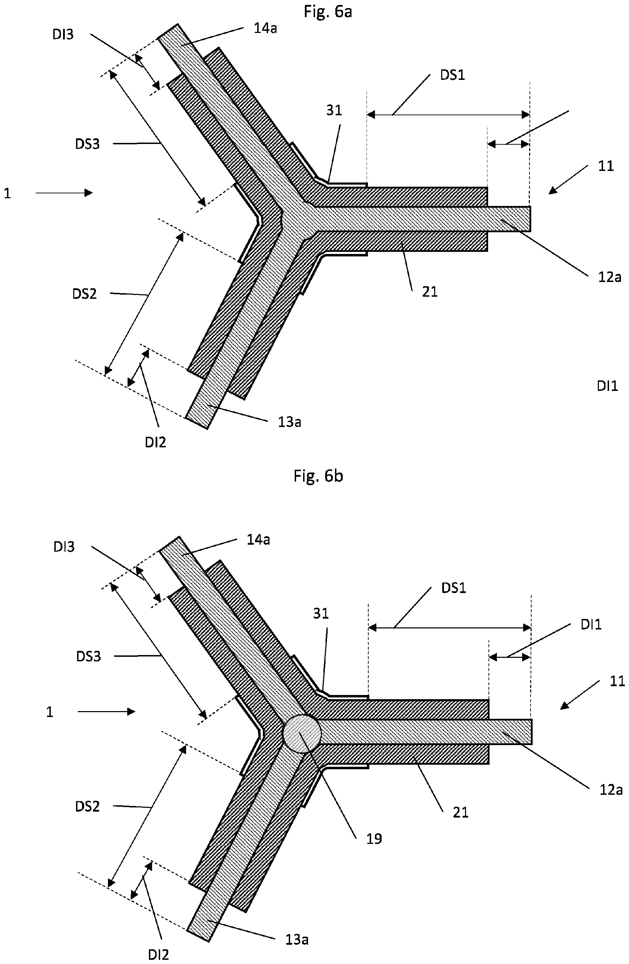

The metal conductor 11 shown in figures 1, 2 and 6a is obtained by connecting the second end 12b of the first elongated conductor element 12 with the second end 13b of the second elongated conductor element 13 and the second end 14b of the third elongated conductor element 14 to each other. The metal conductor 11 of fig. 1 and fig. 2 is T-shaped. The metal conductor 11 of fig. 6a is Y-shaped.

The connector 1 as shown in figures 1, 2 and 6a comprise an insulating layer 21 moulded as one single body onto the second end 12b and the intermediate section 12c of the first elongated conductor element 12 and the second end 13b and the intermediate section 13c of the second elongated conductor element 13 as described for the second embodiment. In addition, it is moulded onto the second end 14b and the intermediate section 14c of the third elongated conductor element 14. In this way, the first end 14a is protruding from the insulating layer 21 with a distance referred to as a third insulator distance DI3.

Connector 1 also comprises a semiconductive layer 31 provided outside of the insulating layer 21 at a first semiconductor distance DS1 from the first end 12a of the first elongated conductor element 12 and a second semiconductor distance DS2 from the first end 13a of the second elongated conductor element 13 as described for the second embodiment. In addition, the semiconductive layer 31 is also provided at a distance referred to as a third semiconductor distance DS3 from the first end 14a of the third elongated conductor element 14.

Fig. 6b shows an Y-connector where the metal conductor 11 is formed by connecting a spheroid-shaped conductor element 19 to the second end 12b of the first elongated conductor element 12, the second end 13b of the second elongated conductor element 13 and the second end 14b of the third elongated conductor element 14.

The insulating layer 21 is moulded as one single body onto the spheroid-shaped conductor element 19, the second end 12b and the intermediate section 12c of the first elongated conductor element 12 and the second end 13b, the intermediate section 13c of the second elongated conductor element 13 and the second end 14b and the intermediate section 14c of the third elongated conductor element 14 in a similar way as for the embodiment shown in figures 1, 2 and 6a.

Also, the semiconductive layer 31 is provided in a similar way as in figures 1, 2 and 6a extending at the first semiconductor distance DS1 from the first end 12a of the first elongated conductor element 12 and at the second semiconductor distance DS2 from the first end 13a of the second elongated conductor element 13 and at the third semiconductor distance DS3 from the first end 14a of the third elongated conductor element 14.

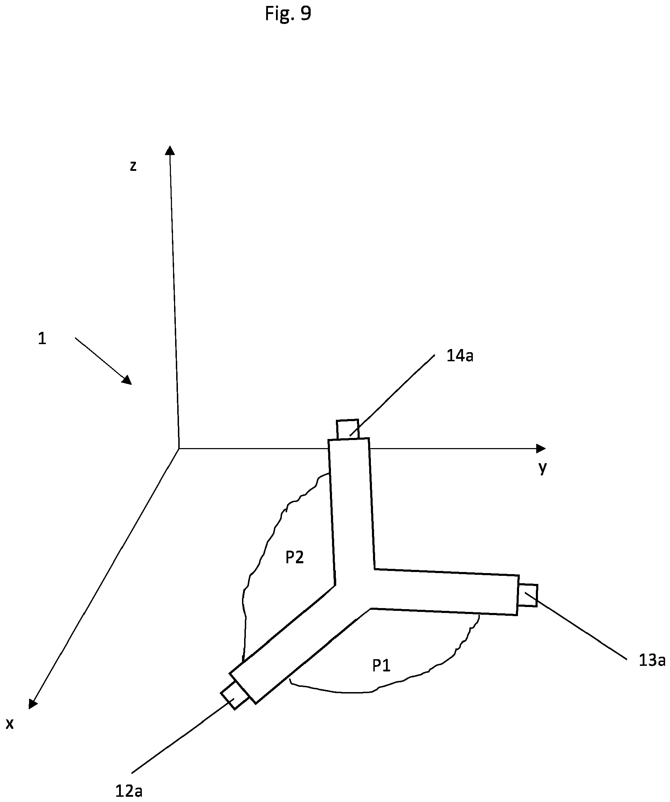

A further embodiment of the metal conductor 11 is shown in fig. 9. In figures 1, 2, 6a and 6b, the Y- or T metal conductors 11 are in the same plane (two-dimensional).

In the embodiment shown in fig. 9, the intermediate section 12c of the first elongated conductor element 12 and the intermediate section 13c of the second elongated conductor element 13 are located in a first plane P1, while the first end 14a of the third elongated conductor element 14 is located in a second plane P2 which is different from the first plane P1.

### Fourth embodiment: U-connector

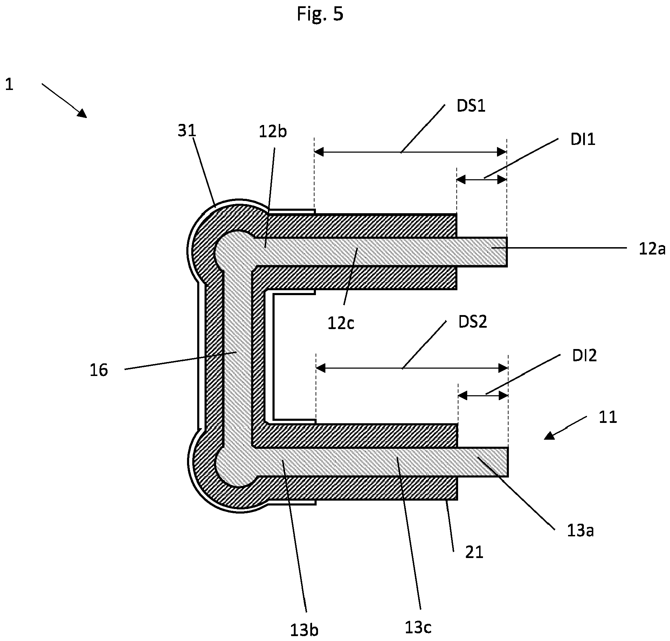

Fig. 5 shows a connector 1 with a U-shaped metal conductor 11. Here, the second end 12b of the first elongated conductor element 12 is connected to the second end 13b of the second elongated conductor element 13 via a first elongated joining element 16 and forms a U-shaped metal conductor 11 wherein the first conductor element 12 is substantially parallel with the second elongated conductor element 13 and wherein the first elongated joining element 16 is substantially perpendicular to the first and second elongated conductor elements 12, 13.

The connector 1 comprises an insulating layer 21 moulded as one single body as described for the second embodiment where in addition the continuous insulating layer is moulded onto the first elongated joining element 16. Hence, the joining element 16 is provided entirely within the insulating layer 21.

### Fifth embodiment: E-connector

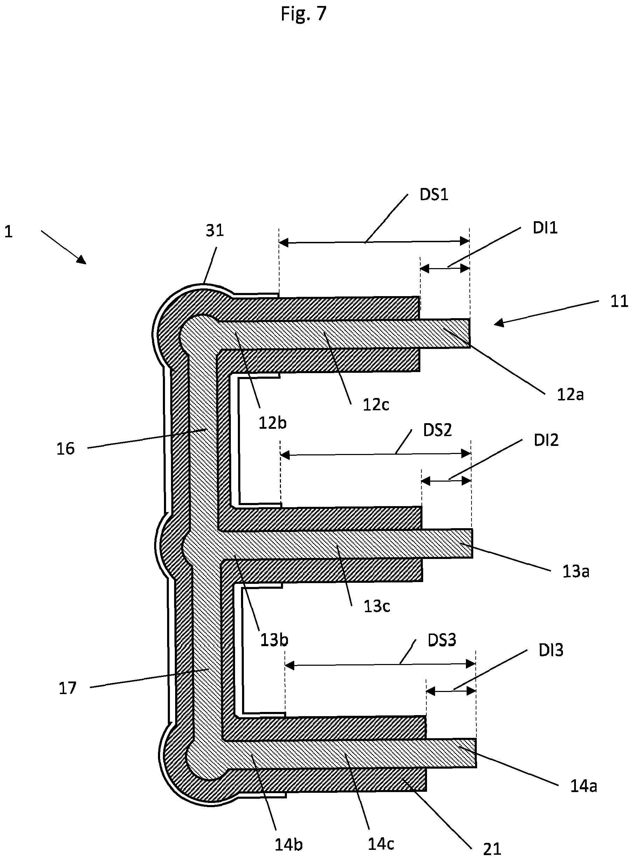

Fig. 7 shows a connector 1 with an E-shaped metal conductor 11, with a first elongated joining element 16 and a second elongated joining element 17. As for the U-shaped connector, the second end 12b of the first elongated conductor element 12 is connected to the second end 13b of the second elongated conductor element 13 via the first elongated joining element 16. In addition, the second end 14b of the third elongated conductor element 14 is connected to the second end 13b of the second elongated conductor element 13 via the second elongated joining element 17.

The connector 1 comprises an insulating layer 21 moulded as one single body as described for the second embodiment and the U connector where in addition the continuous insulating layer 21 is moulded onto the second elongated joining element 17. Hence, the joining element 16 and the joining element 17 are both provided entirely within the insulating layer 21.

### Sixth embodiment: X-connector

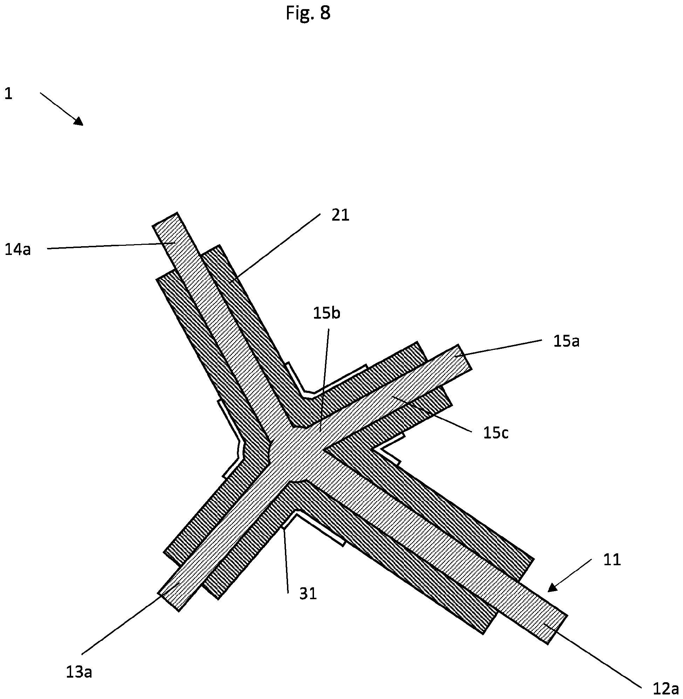

Fig. 8 shows a connector 1 with a metal conductor 11, with a first elongated conductor element 12, a second elongated conductor element 13 and a third elongated conductor element 14 as described in the third embodiment above. In addition, the metal conductor 11 comprises a fourth elongated conductor element 15 having a having a first end 15a, a second end 15b and an intermediate section 15c between the first end 15a and the second end 15b.

The metal conductor 11 shown in fig. 8 is obtained by connecting the second end 12b of the first elongated conductor element 12 with the second end 13b of the second elongated conductor element 13, the second end 14b of the third elongated conductor element 14 and the second end 15b of the fourth elongated conductor element 15. The metal conductor 11 has a X-shape.

### Manufacturing the connectors

For all embodiments described above, the second end 12b of the first elongated conductor element 12, the second end 13b of the second elongated conductor element 13, the second end 14b of the third elongated conductor element 14 and the second end 15b of the fourth elongated conductor element 15, as well as the first elongated joining element 16, the second elongated joining element 17 and the spheroid-shaped conductor element 19 are connected by welding or bolting.

Alternatively, the metal conductor 11 may be machined from one metal piece or it may be made by an additive manufacturing process or similar. Typically, the metal conductor 11 is made from non-ferrous metals such as aluminium or copper.

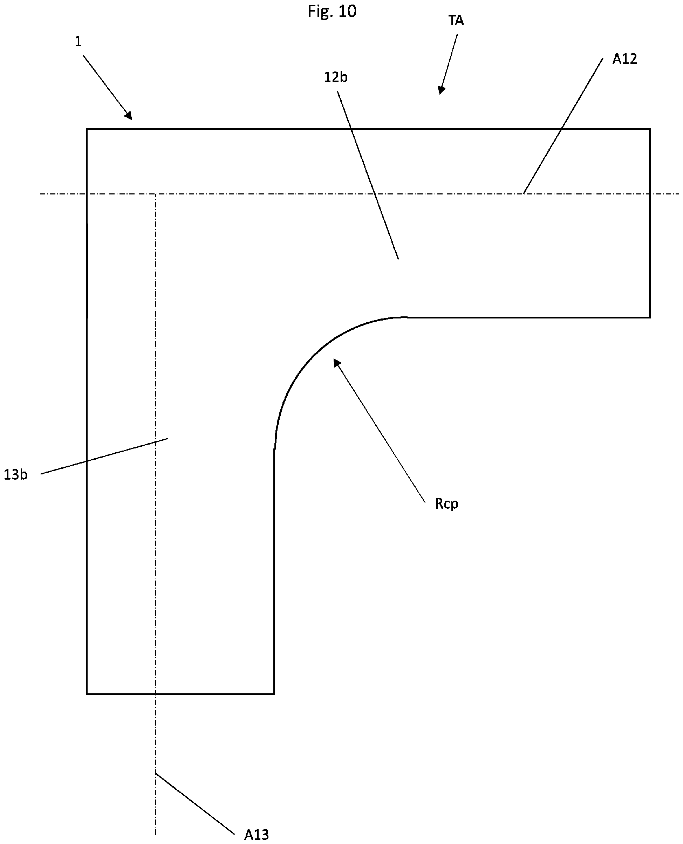

The transition area TA between the first elongated conductor element 12, and the second elongated conductor element 13, and/or the third elongated conductor element 14 and/or the fourth conductor element 15, and/or the first elongated joining element 16, and/or the second elongated joining element 17 and/or the spheroid-shaped conductor element 19 are rounded with a radius Rcp to achieve a better distribution of the electric field strength within the connector 1 by providing a rounded surface when different elements meet, see also fig. 10. The radius Rcp will depend on the voltage level of the electrical system in which the connector is used. The exact radius used in final design is determined by FEM computations. It should be noted that in fig. 10, the dashed line A12 represents the central longitudinal axis of the first elongated conductor element 12, and the dashed line A13 represents the central longitudinal axis of the second elongated conductor element 13.

Typically, a sphere features larger field strength over the surface compared to a cylinder, hence; any end or bend will feature a region with a larger radius to limit the field strength. It might be possible to allow also larger field strength in some regions.

In all of the above embodiments, the insulating layer 21 is moulded as one single insulating body using plastic materials such as thermoplastics or thermosetting polymers. The insulation plastic material may comprise epoxy, polyethylene, cross-linked polyethylene, or a thermoplastic polymer.

The semiconductor layer 31 can be sprayed or coated on the insulating layer 21 later during the assembly process or it can be covered with semiconductive self-amalgamating tape followed by copper mesh. A further alternative for a semiconductor layer 31 is to have a metallic outer screen molded into the insulating layer 21 terminated by a rounded screen break within the molded insulating layer 21.

### Making a connection

Below, it will be described how the connector 1 is being connected to an end of a cable.

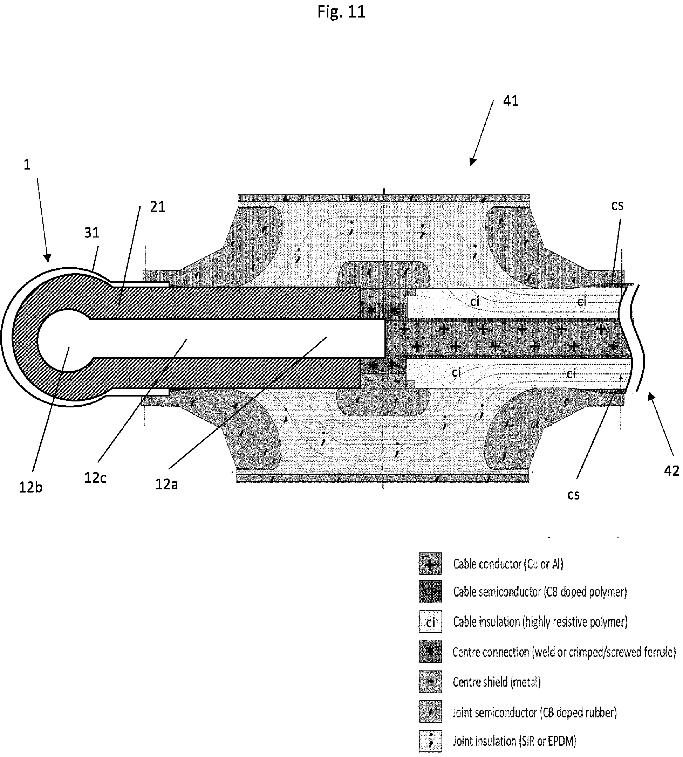

The connector 1 is manufactured and tested in a factory prior to installation. The connector 1 is connected to a corresponding slip-on joint 41 for a high voltage cable 42 as shown in figures 2 and 11. The slip-on joint 41 can either be prefabricated in a factory and tested or is made on site using standard procedures ensuring high quality and reliability of the slip-on joint 41.

The connector 1 shown in figures 3a and 3b is a termination connector for a single cable section. This is an interesting alternative to existing solutions as an Ijoint is mechanically robust and can receive some clamping force.

The connector 1 shown in figures 4a to 9 is a joining element for joining at least two cable sections.

An outer layer of the assembly can feature embodiments such as single or multicomponent watertight and pressure resistant barrier for use in submarine applications. Furthermore, for submarine applications, armor clamps can be designed into the housing for load transfer.

The E, Y or T connectors 1 can connect all three phases of a high voltage cable 42 together during post-installation or factory acceptance tests.

Hence, as is apparent from the above, the connector 1 for a high voltage cable simplifies the installation process in the field.

According to the above, it is achieved a connector 1 which provides a connection and branching off solution for high voltage cables that does not require the use of gas insulation. It is aimed at connections for high voltage cables with a voltage rating of 52 kV or more. Typically, voltages in the interval between 52 kV to 245 kV are referred to as high voltage within this area of technology, while the interval between 245 kV to 800 kV is referred to as extra high voltage.

### LIST OF REFERENCE NUMBERS

1 - connector
11 - metal conductor
12 - first elongated conductor element
12a - first end
12b - second end
12c - intermediate section
13 - second elongated conductor element
13a - first end
13b - second end
13c - intermediate section
14 - third elongated conductor element
14a - first end
14b - second end
14c - intermediate section
16 - first elongated joining element
17 - second elongated joining element
19 - spheroid-shaped conductor element
21 - insulating layer
31 - semiconductive layer
41 - pre-manufactured slip-on joint
42 - high voltage cable
DI1 - first insulator distance
DI2 - second insulator distance
DI3 - third insulator distance
DS1 - first semiconductor distance
DS2 - second semiconductor distance
DS3 - third semiconductor distance
P1 - first plane
P2 - plane
TA - transition area

## Claims

1. A connector (1) for a high voltage cable, comprising:
- a metal conductor (11) comprising a first elongated conductor element (12) having a first end (12a), a second end (12b) and an intermediate section (12c) between the first end (12a) and the second end (12b);
- an insulating layer (21);
- a semiconductive layer (31);
**characterized in that:**
- the insulating layer (21) is moulded onto the second end (12b) and the intermediate section (12c) of the first elongated conductor element (12);
- the insulating layer (21) is provided at a first insulator distance (DI1) from the first end (12a) of the first elongated conductor element (12);
- the semiconductive layer (31) is provided outside of the insulating layer (21); wherein the semiconductive layer (31) is provided at a first semiconductor distance (DS1) from the first end (12a) of the first elongated conductor element (12); wherein the first insulator distance (DI1) is shorter than the first semiconductor distance (DS1);
wherein the insulating layer (21) is moulded as one single insulating body.

2. The connector (1) according to claim 1, wherein the metal conductor (11) comprises:
- a spheroid-shaped conductor element (19) connected to the second end (12b) of the first elongated conductor element (12);
wherein the insulating layer (21) is moulded onto the spheroid-shaped conductor element (19).

3. The connector (1) according to claim 1, wherein the metal conductor (11) comprises a second elongated conductor element (13) having a first end (13a), a second end (13b) and an intermediate section (13c) between the first end (13a) and the second end (13b);
wherein the second end (12b) of the first elongated conductor element (12) is connected to the second end (13b) of the second elongated conductor element (13); wherein the insulating layer (21) is moulded onto the second end (13b) and the intermediate section (13c) of the second elongated conductor element (13); wherein the insulating layer (21) is provided a second insulator distance (DI2) from the first end (13a) of the second elongated conductor element (13);
wherein the semiconductive layer (31) is provided at a second semiconductor distance (DS2) from the first end (13a) of the second elongated conductor element (13).

4. The connector (1) according to claims 2 and 3, wherein the spheroid-shaped conductor element (19) is connected between the second end (12b) of the first elongated conductor element (12) and the second end (13b) of the second elongated conductor element (13).

5. The connector (1) according to claim 3, wherein the metal conductor (11) comprises a third elongated conductor element (14) having a first end (14a), a second end (14b) and an intermediate section (14c) between the first end (14a) and the second end (14b);
wherein the second end (14b) of the third elongated conductor element (14) is connected to the second ends (12b, 13b) of the first and second elongated conductor elements (12, 13);
wherein the insulating layer (21) is moulded onto the second end (14b) and the intermediate section (14c) of the third elongated conductor element (14);
wherein the insulating layer (21) is provided at a third insulator distance (DI3) from the first end (14a) of the third elongated conductor element (14);
wherein the semiconductive layer (31) is provided at a third semiconductor distance (DS3) from the first end (14a) of the third elongated conductor element (14).

6. The connector (1) according to claims 4 and 5, wherein the second end (14b) of the third elongated conductor element (14) is connected to the spheroid-shaped conductor element (19).

7. The connector (1) according to claim 5 or 6, wherein the first, second and third elongated conductor elements (12, 13, 14) are forming a T-shaped structure or a Y-shaped structure.

8. The connector (1) according to anyone of claims 5-7, wherein the intermediate sections (12c, 13c) of the first and second elongated conductor elements (12, 13) are located in a first plane (P1), wherein the first end (14a) of the third elongated conductor element (14) is located in a plane (P2) different from the first plane (P1).

9. The connector (1) according to any one of claims 3-8, wherein the metal conductor (11) comprises:
- a first elongated joining element (16);
wherein the second end (12b) of the first elongated conductor element (12) is connected to the second end (13b) of the second elongated conductor element (13) via the first elongated joining element (16) ;
wherein the insulating layer (21) is moulded onto the first elongated joining element (16).

10. The connector (1) according to claim 9, wherein the first and second elongated conductor elements (12, 13) together with the first joining element (16) are forming a U-shaped structure.

11. The connector (1) according to claims 5 and 9, wherein the metal conductor (11) comprises a second elongated joining element (17);
wherein the second end (14b) of the third elongated conductor element (14) is connected to the second end (13b) of the second elongated conductor element (13) via the second elongated joining element (17);
wherein the insulating layer (21) is moulded onto the second elongated joining element (17).

12. The connector (1) according to claim 11, wherein the first, second and third elongated conductor elements (12, 13, 14) together with the first and second elongated joining elements (16, 17) are forming an E-shaped structure.

13. The connector (1) according to anyone of claims 2 to 12, wherein the metal conductor (11) is made as one single metal body.

14. The connector (1) according to anyone of claims 3 to 13, wherein a transition area (TA) between the second ends (12b, 13b) of the first and second elongated conductor elements (12, 13) is rounded.

15. The connector (1) according to anyone of to anyone of claims 3 to 13, wherein the connector (1) is a joining element for joining at least two cable sections.
